# EUROPÄISCHE PATENTSCHRIFT

(11) **EP 2 210 221 B1**
(45) Veröffentlichungstag und Bekanntmachung des Hinweises auf die Patenterteilung: **25.06.2014**
(21) Anmeldenummer: 08850032.7
(22) Anmeldetag: 13.11.2008
(51) Int. Cl.: G06K 19/073, G06K 19/077, G07F 7/00

(54) **HERSTELLEN EINES PORTABLEN DATENTRÄGERS**
PRODUCTION OF A PORTABLE DATA CARRIER
FABRICATION D'UN SUPPORT DE DONNÉES PORTABLE

(30) Priorität: 14.11.2007 DE 102007054385
(43) Veröffentlichungstag der Anmeldung: 28.07.2010
(73) Patentinhaber: Giesecke & Devrient GmbH, 81677 München (DE)
(72) Erfinder: TARANTINO, Thomas, 83410 Laufen (DE); JANSEN, Jens, CH-6315 Oberägeri (CH)
(86) Internationale Anmeldenummer: PCT/EP2008/009625
(87) Internationale Veröffentlichungsnummer: WO 2009/062724

(56) Entgegenhaltungen:
- EP-A- 1 610 261
- WO-A-2005/098764
- WO-A1-97/15027
- DE-A1- 19 908 285
- DE-A1-102005 030 628
- US-A1- 2003 132 301

## Beschreibung

Die vorliegende Erfindung betrifft ein Verfahren zum Herstellen eines portablen Datenträgers sowie einen derartigen portablen Datenträger.

Das Einschreiben von datenträger- oder personenindividuellen Daten in einen Chip, der in einen portablen Datenträger, z. B. in einer Chipkarte, eingebettet ist, ist nur über eine geeignete Datenkommunikationsverbindung von einer außerhalb des Datenträgers befindlichen Schreibeinrichtung zu dem eingebetteten Chip möglich.

In diesem Zusammenhang ist es bekannt, an der Außenseite von portablen Datenträgern Kontaktflächen bereitzustellen, über die datenträger- oder personenindividuelle Daten (z.B. Personalisierungsdaten) in den Chip des Datenträgers eingeschrieben werden können. Derartige datenträgerindividuelle oder Personalisierungsdaten betreffen individualisierende Daten einer Person oder einer Datenträgerkonfiguration oder dergleichen, die nicht bereits bei der Initialisierung des Datenträgers eingespielt werden können, da sie insbesondere keine für eine Vielzahl von Datenträgern geeigneten datenträgerund/ oder personenunabhängige Daten sind. Dazu werden die datenträgeroder personenindividuellen Daten über ein Kontaktfeld des Datenträgers in den vollständig in ein Kunststoffsubstrat eingebetteten (bereits initialisierten) Chip eingeschrieben.

Derartige Kontaktfelder sind optisch auffällig und schaffen über die gesamte Lebensdauer des Datenträgers einen prinzipiellen Zugang zu den sensiblen Daten im Chip, der für Manipulationen und Ausspähungen ausgenutzt werden könnte. Darüber hinaus reduzieren sie die Lebensdauer des Chips, da äußere Einflüsse, wie z. B. Spannungen, direkt in den Chip gelangen können.

Ebenso ergibt sich die Schwierigkeit, dass derartige elektronisch personalisierte, d.h. mit Personalisierungsdaten versehene Datenträger nachfolgend nicht ohne weiteres einer optischen Personalisierung - d.h. einer sichtbaren, individualisierenden Beschriftung oder Prägung - zugeordnet werden können, da die in den Chip eingeschriebenen Personalisierungsdaten bei der optischen Personalisierung nur schwer ausgelesen werden können.

In diesem Zusammenhang offenbart die DE 195 00 925 A1 eine Chipkarte zur kontaktlosen Datenübertragung, die jedoch an einer ihrer Außenseiten mit Kontaktflächen versehen ist, so dass auch hier die oben genannten Nachteile im Zusammenhang mit der Personalisierung auftreten.

WO 97/15027 A1, das als der nächstliegendet Stand der Technik betrachtet wird, beschreibt einen Token, der eine elektronische Schaltung mit einer bidirektionalen elektronischen Schnittstelle für den Zugriff auf die Schaltung aufweist. Die Schaltung umfasst einen Identifizierungscode. Der Code wird durch Verbinden der Schaltung mit einem Leiter außerhalb der Schaltung als Teil eines nicht flüchtigen Codierungsmechanismuses realisiert. Der Code kann in einem EEPROM-Speicher gespeichert werden, der durch Verbinden seines Schreib-Aktivierungs-Anschlusses mit einer geeigneten Spannung abgespeichert ist. Eine zweite Realisierung wird erreicht durch selektive Codierungsverbindungen zwischen einer Reihe von Bondpads und einem Leiter zur Bildung einer Reihe von Code-Elementen.

US 2003/0132301 A1 beschreibt eine kontaktlose Chipkarte, deren äußere Schicht eine schützende Hülle für die inneren elektronischen Komponenten bildet, welche einen Datenspeicher und eine Hochfrequenz-Sende-Empfangerschaltung, eine Antenne und einen manuell betätigten Schalter, der normalerweise offen ist und zwischen der elektronischen Schaltung und der Antenne angeordnet ist, enthält.

Der offene Schalter verhindert den unbeabsichtigten Betrieb der Karte, wobei die Daten auf der Karte vor einem unberechtigten Zugriff geschützt werden und erst bei einer bewussten Betätigung des Schalters durch den Kartenbesitzer wird ein Zugriff auf die Daten ermöglicht. Der Kartenbesitzer kann die Karte aktivieren indem er von außen einen Druck auf die Karte an einem vorbestimmten Ort aufbringt, wobei dabei der Schalter geschlossen wird und der Schalter wird wieder geöffnet, wenn der Druck nicht mehr aufgebracht wird.

Eine taktile Markierung auf der Oberfläche der Karte ermöglicht es dem Kartenbesitzer durch Berührung zu bestimmen, wo auf die Karte gedrückt werden soll, um eine Datenübertragung zu ermöglichen.

In einer alternativen Ausführungsform kann ein passender Schlüssel, welcher im Besitz des Kartenbesitzers ist, in die Nähe der Karte gebracht werden, um den normalerweise offenen Schalter zu schließen, um das Auslesen von Daten aus der Karte zu ermöglichen.

Demzufolge ist es die Aufgabe der vorliegenden Erfindung, ein Herstellungsverfahren für portable Datenträger anzugeben, das ein sicheres und effizientes Einschreiben von datenträgerindividuellen Daten in den Chip und eine effiziente Personalisierung des Datenträgers erlaubt.

Die Aufgabe der Erfindung wird durch das Verfahren von Anspruch 1 und die Vorrichtung von Anspruch 6 gelöst.

Bei einem erfindungsgemäßen Verfahren zum Herstellen eines portablen Datenträgers durch Aufbringen eines über Kontakte kontaktierbaren Chips auf ein Datenträgersubstrat und anschließendem Abdecken zumindest der Kontakte, wird der auf dem Datenträgersubstrat aufgebrachte Chip vor dem Abdecken durch Kontaktieren der Kontakte beschrieben. Die Kontakte werden anschließend derart abgedeckt, dass sie von außerhalb des Datenträgers nicht mehr kontaktierbar sind. Ein auf diese Weise hergestellter portabler Datenträger umfasst dementsprechend ein Datenträgersubstrat, einen darauf aufgebrachten, über Kontakte kontaktierbaren Chip und eine sich zumindest über die Kontakte erstreckende Abdeckung, wobei in dem Chip datenträgerindividuelle Daten gespeichert sind und sich die Abdeckung derart über die Kontakte erstreckt, dass der Chip von außerhalb des Datenträgers nicht kontaktierbar ist, so dass auf die datenträgerindividuellen Daten des Chips nicht zugegriffen werden kann.

Ein erfindungsgemäß abgedeckter Chip gewährt ein hohes Maß an Sicherheit gegenüber unerlaubten Manipulationen des Chips und unerwünschtem Auslesen der datenträgerindividuellen Daten aus dem Chip, da ein Zugang zu dem Chip erst durch Entfernen der Abdeckung und Freilegen der Kontakte geschaffen werden muss. Darüber hinaus gibt es keine elektrische Verbindung zwischen der Außenseite des Datenträgers und dem Chip, so dass eine Beeinträchtigung des Chips durch elektrostatische Entladungen oder andere physikalische Einflüsse ausgeschlossen werden kann.

Das Kontaktieren der Kontakte von außerhalb des Datenträgers durch die Abdeckung hindurch wird vorzugsweise dadurch verhindert, dass zumindest die Kontakte, vorzugsweise aber der vollständige Chip, mit einer Abdeckplatte abgedeckt werden, die keine elektrische Verbindung zwischen der dem Datenträgersubstrat und den Kontakten zugewandten Seite der Abdeckplatte und deren Außenseite (bzw. der Außenseite des Datenträgers) bietet, sondern zumindest im Bereich der Kontakte elektrisch isoliert ist. Vorzugsweise wird als Abdeckplatte ein Chipmodul mit einem auf der von dem Datenträgersubstrat abgewandten Seite befindlichen und von außerhalb des Datenträgers kontaktierbaren Kontaktfeld verwendet, das jedoch keine leitende Verbindung von dem Kontaktfeld zu der dem Datenträgersubstrat zugewandten Seite des Chipmoduls und damit zu den Kontakten aufweist. Auf diese Weise kann der optische Eindruck einer "echten" Chipkarte mit einem üblichen Kontaktfeld erweckt werden, ohne dass die obigen Nachteile eines von außerhalb des Datenträgers über ein Kontaktfeld kontaktierbaren Chips bestehen. Vorzugsweise wird zu diesem Zweck ein Chipmodul verwendet, das zwar ein übliches Modultape mit einem herkömmlichen Kontaktfeld aufweist, die elektrische Verschaltung und Kontaktierung des Kontaktfelds durch das Chipmodul hindurch jedoch nicht ausgeführt ist, so dass das Chipmodul lediglich als mechanischer Kontaktverschluss fungiert.

Vorzugsweise werden zwischen der Anordnung aus Chip und Kontakten sowie der Abdeckplatte eine oder mehrere weitere Substratschichten angeordnet, die mit ihrer dem Datenträgersubstrat zugewandten Seite zumindest die Kontakte, vorzugsweise aber auch den Chip bedecken, und auf deren vom Datenträgersubstrat abgewandten Seite die Abdeckung angebracht ist. Im Rahmen der Herstellung eines Datenträgers werden nach dem Aufbringen dieser einen oder mehreren Substratschichten auf das Datenträgersubstrat zum Einbetten des Chips Kontaktlöcher durch die Substratschicht(en) hindurch zu den Kontakten gebildet, um ein Einschreiben von datenträgerindividuellen Daten in den Chip über die durch die Kontaktlöcher erreichbaren Kontakte zu ermöglichen. Nach dem Beschreiben des Chips bleiben die Löcher entweder ungefüllt oder werden mit einem nicht-leitenden, elektrisch isolierenden Material aufgefüllt, bevor die Abdeckplatte derart auf dem/den Substratschichten angeordnet wird, dass sie sich zumindest über die ungefüllten oder mit einem isolierenden Material gefüllten Kontaktlöcher erstreckt. Vorzugsweise ist zwischen dem Datenträgersubstrat und der Abdeckplatte jedoch nur eine Substratschicht vorgesehen, die die Kontakte und vorzugsweise auch den Chip gemeinsam mit dem Datenträgersubstrat vollständig einbettet.

In diesem Zusammenhang schließen Formulierungen, wie z.B. "sich über die Kontakte erstreckend", "die Kontakte abdeckend" oder "im Bereich der Kontakte", nicht aus, dass weitere Schichten zwischen den Kontakten und der Abdeckplatte existieren. Derartige Formulierungen schränken die vorliegende Erfindung also nicht auf Ausführungsformen ein, bei denen eine Abdeckplatte oder eine sonstige den Datenträger bildende Schicht, Folie oder dergleichen die Kontakte tatsächlich berührt, also auf den Kontakten angeordnet ist, sondern umfassen auch Anordnungen, bei denen die betreffende Abdeckplatte, Schicht oder Folie durch weitere Schichten von den Kontakten getrennt ist, also lediglich "oberhalb" der Kontakte liegt.

Auch bei Verwendung einer Substratschicht zwischen Datenträgersubstrat und Kontaktplatte ist eine Kontaktierung des Chips nach Aufbringen der Abdeckplatte nicht mehr möglich. Da die Kontakte durch die nicht gefüllten oder mit einem nicht-leitenden Material gefüllten Kontaktlöcher hinreichend elektrisch isoliert sind, kann die Abdeckplatte bei dieser Ausführungsform aus einem herkömmlichen Chipmodul bestehen, das leitende Verbindungen zwischen einem Kontaktfeld an der Außenseite des Datenträgers und der dem Datenträgersubstrat zugewandten Seite des Chipmoduls aufweist. Diese leitenden Verbindungen können auf der dem Datenträgersubstrat zugewandtenSeite des Chipmoduls insbesondere auch im Bereich der Kontaktlöcher in der Substratschicht oberhalb der Kontakte bestehen. Das Chipmodul ist vorzugsweise mit einem sechs- oder achtfeldrigen Kontaktfeld gemäß ISO 7816 ausgestattet.

Neben der Verwendung eines Chipmoduls als Abdeckplatte kann jede andere geeignete Abdeckung verwendet werden. Eine andere geeignete Abdekkung kann auch eine Platte aus Kunststoff oder Metall sein. Auf der Abdekkung kann sich auch ein Sicherheitselement, wie z.B. ein Hologramm, befinden. In die Abdeckplatte kann z.B. ein Firmenlogo eingeprägt sein oder die Abdeckplatte kann eine bestimmte Form aufweisen, wie z.B. die Form eines Firmenlogos.

Die Abdeckung kann an jeder beliebigen Stelle angebracht werden, sie ist nicht auf die ISO-Position festgelegt.

Vorzugsweise wird auf der von dem Datenträgersubstrat abgewandten Seite der Substratschicht eine Ausnehmung eingebracht, in die die Abdeckplatte bzw. das Chipmodul eingesetzt werden kann. Diese Ausnehmung entspricht genau der Form und Ausdehnung des Chipmoduls und erstreckt sich vorzugsweise über die Kontakte und den Chip.

Bei den in den Chip eingeschriebenen datenträgerindividuellen Daten handelt es sich vorzugsweise um Personalisierungsdaten einer Person, der der Datenträger eindeutig zuzuordnen ist, wie beispielsweise Name, Adresse und sonstige Identifikationsmerkmale der Person. Grundsätzlich können neben den vorher erwähnten personenbezogenen Daten auch nicht personenbezogene Daten, wie z.B. eine Seriennummer, als datenträgerindividuelle Daten verwendet werden. Insofern handelt es sich bei den datenträgerindividuellen Daten gerade nicht um datenträgerunabhängige Daten, wie z. B. Applikationen, ein Betriebssystem und allgemeine Verwaltungsdaten des Datenträgers. Da die Personalisierungsdaten erfindungsgemäß bereits während einer elektronischen Personalisierung im Rahmen des Herstellungsprozesses in den Chip eingeschrieben werden können, ist es möglich, die entsprechende optische Personalisierung des Datenträgers im Wesentlichen gleichzeitig mit der elektronischen Personalisierung durchzuführen.

Demzufolge kann sowohl die elektronische als auch optische Personalisierung bereits durchgeführt werden, bevor der betreffende Datenträgerkörper mit dem Datenträgersubstrat aus einem zusammenhängenden Substratbogen herausgetrennt wird, aus dem eine Vielzahl von Datenträgerkörpern ausgestanzt werden. Dadurch ist eine einfache Zuordnung von Datenträgern mit Personalisierungsdaten zu einer optischen Personalisierung möglich. Ein derartiger Herstellungsprozess kann mit einem größeren Produktionsdurchsatz durchgeführt werden, da elektronische und optische Personalisierung parallel erfolgen können und Zuordnungsprobleme nicht auftreten. Darüber hinaus sind die bekannten Herstellungsverfahren und -anlagen verwendbar, so dass eine effiziente und kostengünstige Herstellung von personalisierten Datenträgern erfolgen kann.

Vorzugsweise ist der Chip das Datenträgers derart eingerichtet, dass eine Datenkommunikation über ein kontaktbehaftetes Kommunikationsprotokoll möglich ist, insbesondere über das T=1- oder T=0-Protokoll, wobei grundsätzlich jedes andere geeignete Kommunikationsprotokoll verwendet werden kann. Demzufolge werden auch die Personalisierungsdaten gemäß einem kontaktbehafteten Kommunikationsprotokoll, vorzugsweise gemäß dem T=1-Protokoll, in den Chip eingeschrieben. Eine kontaktlose Kommunikationsschnittstelle umfasst ein erfindungsgemäßer Datenträger vorzugsweise nicht, da dies weitere Manipulationsmöglichkeiten des in einem Datenträgersubstrat eingebetteten Chips über die kontaktlose Schnittstelle eröffnen würde, es sein denn, dass ein kontaktloser Datenkommunikationszugang zu dem Chip dauerhaft und wirksam verhindert werden kann.

Vorzugsweise wird der Chip mit den Kontakten nicht direkt auf dem Datenträgersubstrat aufgebracht, sondern es wird zunächst eine die Kontakte umfassende Schaltungsfolie auf dem Datenträgersubstrat angeordnet. Auf der Schaltungsfolie wird der Chip dann derart aufgebracht, dass eine elektrische Verbindung zwischen dem Chip und den Kontakten entsteht. Etwaige Kontaktlöcher durch eine Substratschicht hindurch enden an den Stellen der Schaltungsfolie, an denen die Kontakte auf der Schaltungsfolie angebracht sind.

Des Weiteren ist der Datenträger vorzugsweise als chipkartenförmiger Datenträger ausgestaltet, so dass zumindest das Datenträgersubstrat, unter Umständen aber auch weitere Substratschichten und Folien, das übliche Format einer ID1-Karte aufweist. Insbesondere ist ein erfindungsgemäßer Datenträger als personalisierter Einmalpasswort-Generator (OTP-Generator) ausgestaltet, der eine Anzeigeeinrichtung sowie vorzugsweise eine Eingabeeinrichtung, z.B. einen Knopf oder eine Taste, besitzt, über die ein Benutzer ein neues Passwort anfordern und auf der Anzeigeeinrichtung ablesen kann. Da derartige OTP-Generatoren außer dem Anzeigen von Einmalpasswörtern prinzipiell keine Datenkommunikation durchführen (sollen), kann auf von außerhalb des OTP-Generators zugängliche Kontaktflächen verzichtet werden. Die Herstellung und Personalisierung eines derartigen OTP-Generators ist dann vorteilhaft gemäß dem erfindungsgemäßen Verfahren durchführbar. Neben der Funktion eines OTP-Generators können sich auch andere geeignete Funktionen oder Applikationnen auf dem Chip befinden, wie z.B. eine Betragfunktion für eine Geldkarte. Darüber hinaus eignet sich das beschriebene Verfahren auch zur Herstellung und Personalisierung von beliebigen anderen portablen Datenträgern, die einer Datenkommunikationsschnittstelle zu dem Chip nicht bedürfen.

Weitere Merkmale der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Fig. 1: ein schematisches Flussdiagramm eines erfindungsgemäßen Verfahrens;
- Fig. 2: eine Draufsicht auf eine Schaltungsfolie mit Chip und Kontakten, die auf einem Datenträgersubstrat aufgebracht ist;
- Fig. 3: eine Draufsicht auf einen Datenträger mit Chipmodul;
- Fig. 4: eine Querschnittsansicht eines erfindungsgemäßen Datenträgers zum Zeitpunkt des Personalisierens; und
- Fig. 5: einen Querschnitt eines fertiggestellten erfindungsgemäßen Datenträgers mit Abdeckplatte; und
- Fig. 6: einen als chipkartenförmigen Einmalpasswort-Generator ausgestalteten erfindungsgemäßen Datenträger.

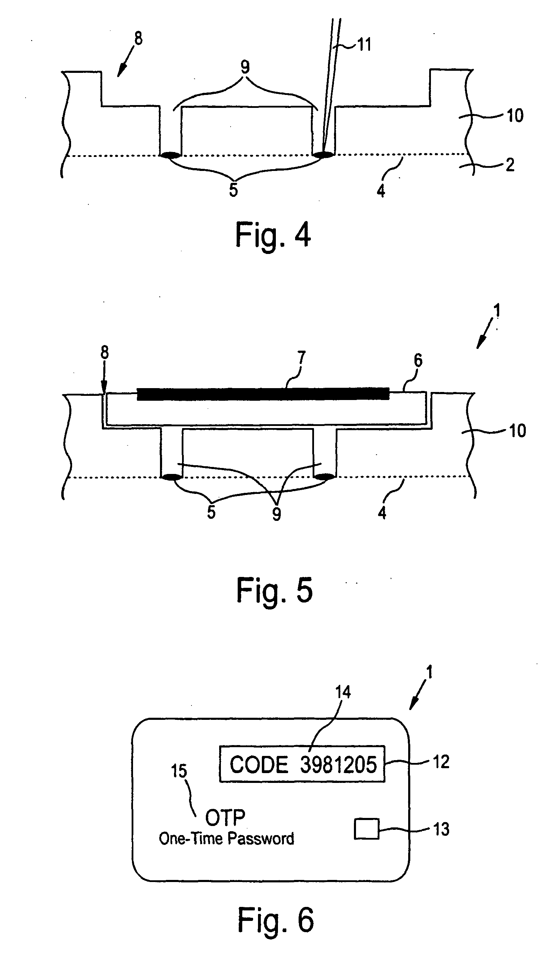

Ein Einmalpasswort-Generator (OTP-Generator) 1 in Chipkartenformat mit einer Anzeigevorrichtung 12 in Form eines Displays oder dergleichen und einer Eingabeeinrichtung 13, z. B. in Form eines Knopfs, ist in Fig. 6 dargestellt. Eine Beschriftung 15 auf der Außenseite des OTP-Generators 1 kann hierbei eine optische Personalisierung des OTP-Generators 1 bilden. Wahlweise kann ein OTP-Generator 1 auch anstelle einer eigenen Anzeigeeinrichtung 12 lediglich eine Anzeigeschnittestelle (nicht dargestellt) aufweisen, über die der OTP-Generator an eine externe (ebenfalls portable) Anzeigeeinrichtung angeschlossen werden kann.

Mit einem OTP-Generator 1 wird ein Einmalpasswort-Verfahren zur Authentifikation einer Person, auf die der OTP-Generator 1 personalisiert ist, gegenüber einer externen Stelle bereitgestellt. Für jede Authentifikation wird ein neues Passwort 14 in dem OTP-Generator 1 erzeugt und über die Anzeigeneinrichtung 12 bereitgestellt. Das neu erzeugte Passwort 12 wird ungültig, sobald es benutzt wurde, so dass eine unerlaubte Wiederverwendung eines benutzten Passworts 12 ausgeschlossen werden kann. Damit löst das Einmalpasswort-Verfahren ein grundlegendes Problem statischer Passwörter, die aufgrund der Möglichkeit des Ausspähens und mehrfachen Verwendens Nachteile haben. Demzufolge ist das Einmalpasswort-Verfahren beispielsweise zur Authentifikation gegenüber Bankautomaten, beim Online-Banking über das Internet oder jeder anderen Art der elektronischen Authentisierung einsetzbar.

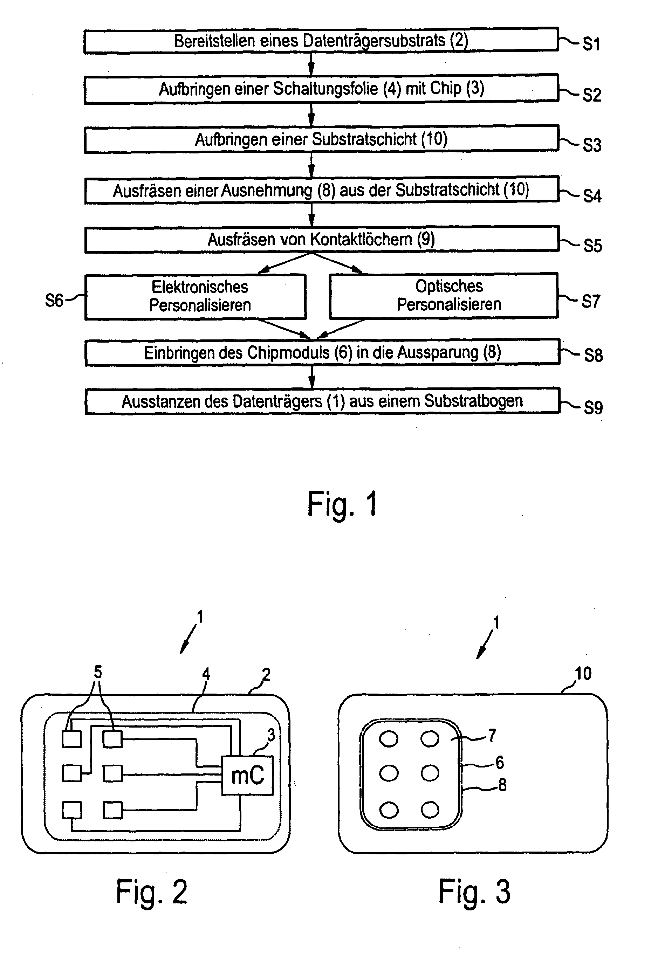

Ein OTP-Generator 1 hat aus Sicherheitsgründen üblicherweise keine Datenkommunikationsschnittstelle, über die von außerhalb des OTP-Generators 1 auf dessen Chip bzw. dessen Speicher zugegriffen werden kann. Aus diesem Grund müssen Personalisierungsdaten des zukünftigen Besitzers bereits integriert in den Herstellungsprozess des Datenträgers in den Chip des OTP-Generators 1 eingespielt werden und nicht, wie üblich, in einem separaten Personalisierungsschritt. Ein Verfahren zum Herstellen und Personalisieren eines derartigen OTP-Generators 1 ist in Fig.1 dargestellt. Bei der folgenden Erläuterung des Verfahrens gemäß Fig. 1 wird über die Angabe von Bezugszeichen auch auf die Fig. 2 bis 5 verwiesen, welche verschiedene Stadien des Herstellungsprozesses illustrieren.

In Schritt S1 wird ein Datenträgersubstrat 2 bereitgestellt, das z. B. eine Kunststoffschicht aus einem geeigneten Material sein kann. Üblicherweise ist das Datenträgersubstrat 2 in diesem Stadium noch in einem Substratbogen (nicht dargestellt) integriert und wird erst später im Verfahren, nachdem das Datenträgersubstrat 2 mit weiteren Komponenten des Danträgers 1 bestückt und mit weiteren Folien oder Schichten aufgefüllt und dann laminiert wurde, ausgestanzt, um einen einzelnen Datenträger 1 zu bilden.

In Schritt S2 wird eine Schaltungsfolie 4 auf dem Datenträgersubstrat 2 aufgebracht, die ein Schaltungslayout für einen auf der Schaltungsfolie 4 aufzubringenden Chip 3 aufweist. Das Schaltungslayout der Schaltungsfolie 4 stellt eine elektrische Verbindung von einem Chip 3 des Datenträgers 1 zu den auf der Schaltungsfolie 4 angeordneten Kontakten 5 her. Hierbei kann der Chip 3 bereits vorher auf die Schaltungsfolie 4 aufgebracht worden sein, so dass in Schritt S2 die Schaltungsfolie 4 gemeinsam mit dem Chip 3 aufgebracht wird, oder der Chip 3 kann nach Aufbringen der Schaltungsfolie 4 auf das Datenträgersubstrat 2 in einem separaten Schritt auf die Schaltungsfolie 4 aufgebracht werden. Über die von der Schaltungsfolie 4 bereitgestellten Kontakte 5 kann der Chip 3 in einem späteren Verfahrensstadium personalisiert oder anderweitig mit datenträgerindividuellen Daten beschrieben werden.

In Schritt S3 wird eine Substratschicht 10, z. B. in Form einer weiteren Kunststoffschicht, auf das Datenträgersubstrat 2 und damit auch auf die Schaltungsfolie 4, deren Kontakte 5 und den Chip 3 aufgetragen, so dass zumindest die Kontakte, vorzugsweise auch der Chip 3 vollständig in einem aus Datenträgersubstrat 2 und Substratschicht 10 bestehenden Datenträgerkörper eingebettet sind, der prinzipiell keinen kontaktbehafteten Zugang zu den Kontakten 5 und/ oder dem Chip 3 ermöglicht.

Sobald der Kunststoff der Substratschicht 10 ausgehärtet ist, wird in Schritt S4 eine Ausnehmung 8 aus der Substratschicht 10 für ein darin einzusetzendes Chipmodul 6 ausgefräst. Die Lage dieser Ausnehmung 8 auf dem Datenträger 1 kann z. B. die standardisierte Position eines Chipmoduls 6 mit Kontaktflächen 7 gemäß ISO 7816 sein. Die Ausnehmung 8 muss sich allerdings zumindest über die unter der Substratschicht liegenden Kontakte 5 erstrecken. Das Chipmodul 6 selbst wird erst nach dem elektronischen Personalisieren des Chips 2 in die Ausnehmung 8 eingesetzt.

In Schritt S5 werden in der Ausnehmung 8 Kontaktlöcher 9 durch die gesamte Substratschicht 10 hindurch zu den auf der Schaltungsfolie 4 befindlichen Kontakten 5 ausgefräst, gebohrt oder anderweitig angebracht.

In Schritt S6 erfolgt die elektronische Personalisierung des Datenträgers 1, indem Personalisierungsdaten mittels einer Schreibeinrichtung 11 über die freigelegten Kontakte 5 in den Chip 3 eingeschrieben werden. Die Personalisierungsdaten können identifizierende Angaben einer Person sein, der der Datenträger zugeordnet werden soll, z.B. Name, Adresse, Geburtsdatum oder dergleichen. Darüber hinaus können in Schritt S6 zusätzlich oder alternativ alle anderen datenträgerindividuellen Daten in den Chip 3 eingeschrieben werden, die insbesondere während der bereits erfolgten Initialisierung des Chips 3 mit datenträgerunabhängigen Daten nicht aufgespielt werden konnten.

Im Wesentlichen gleichzeitig oder zumindest zeitnah mit der elektronischen Personalisierung in Schritt S6 erfolgt im gleichen Verfahrensstadium in Schritt S7 die optische Personalisierung des Datenträgers 1 mittels bekannter Herstellungsverfahren und -anlagen, indem personenindividuelle Daten, möglicherweise teilweise solche, die bereits bei der elektronischen Personalisierung verwendet wurden, auf der Substratschicht 10 mittels Laser, Aufdrucken, Ausstanzen, Hochprägen oder dergleichen aufgebracht werden. Vorzugsweise ist das Datenträgersubstrat 2 zum Zeitpunkt der parallelen elektronischen/ optischen Personalisierung in den Schritten S6 und S7 noch in einen Substratbogen eingebunden, so dass eine Koordinierung der elektronischen und optischen Personalisierung des gleichen Kartenkörpers - anders als bei der nachgeschalteten, separaten optischen Personalisierung eines fertigen, elektronisch personalisierten Datenträgers - über die Topologie des Substratbogens gegeben ist, da der Datenträgerkörper mit dem integrierten Chip 3 in dem Substratbogen fixiert ist.

In Schritt S8 wird ein Chipmodul 6 in die passgenau ausgefräste Ausnehmung 8 eingesetzt, wobei die Kontaktlöcher 9 vorzugsweise ungefüllt bleiben. Dies schafft eine elektrische Isolierung der in den Kontaktlöchern 9 liegenden Kontakte 5 gegenüber der dem Datenträgersubstrat 2 zugewandten Seite des Chipmoduls 6. Alternativ können die Kontaktlöcher 9 in einem Zwischenschritt vor dem Aufbringen des Chipmoduls 6 auch mit einem nicht-leitenden, elektrisch isolierenden Material aufgefüllt werden.

Abschließend wird der fertig aufgebaute und vollständig personalisierte Datenträger 1 aus dem Substratbogen in Schritt S9 ausgestanzt und liegt dann als separater, vollständig personalisierter Datenträger 1 vor.

Natürlich ist das beschriebene Verfahren generisch zu verstehen, d.h. es können ohne weiteres auch Zwischen- und weitere Schritte vorhanden sein, die weitere Zwischenschichten, Folien oder dergleichen in den Aufbau des Datenträgers integrieren. Auch können weitere Komponenten im Rahmen des beschriebenen Verfahrens in den Datenträger 1 eingebracht werden, z.B. eine Eingabeeinrichtung 13, Anzeigeeinrichtungen 12, Datenkommunikationsschnittstellen oder dergleichen. Außerdem erfolgt zumeist noch eine farbliche Gestaltung der Außenseiten des Datenträgers 1 durch Lackieren, Bedrucken oder Aufkleben bedruckter Folien.

Bei dem Chipmodul 6 kann es sich um ein übliches sechs- oder achtfeldriges Chipmodul nach ISO 7816 handeln, das auf der Außenseite ein Kontaktfeld 7 umfasst, welches elektrisch leitend mit der dem Datenträgersubstrat 2 zugewandten Seite des Chipmoduls 6 verbunden ist, insbesondere mit denjenigen Bereichen der dem Datenträgersubstrat 2 zugewandten Seite des Chipmoduls 6, die später über den Kontaktlöchern 9 zu liegen kommt. Da die Kontaktlöcher 9 entweder ungefüllt oder mit einem isolierenden Material gefüllt sind, ist trotz dieser Kontaktierung des Kontaktfelds 7 keine elektrische Verbindung zwischen dem Kontaktfeld 7 und den Kontakten 5 und somit zu dem Chip 3 gegeben. Natürlich kann auch ein präpariertes Chipmodul 6 verwendet werden, dass lediglich ein Modultape mit dem Kontaktfeld 6 besitzt, wobei eine weitere Verschaltung oder Kontaktierung des Kontaktfelds 7 nicht ausgeführt ist. In diesem Falle existieren auf der dem Datenträgersubstrat 2 zugewandten Seite des Chipmoduls 6 keine elektrischen Kontakte. Abhängig von der Art und Ausgestaltung des verwendeten Chipmoduls 6 sind zu dessen Befestigung in Schritt S5 noch ein oder mehrere Sacklöcher in die Substratschicht 10 zu fräsen.

Vorzugsweise wird der Chip 3 über ein kontaktbehaftetes Kommunikationsprotokoll mit Personalisierungsdaten oder anderen datenträgerindividuellen Daten beschrieben, beispielsweise über das im Chipkartenbereich übliche T=1-Protokoll oder T=0-Protokoll gemäß ISO 7816. Die Anzahl der Kontakte 5, die durch ein Kontaktloch 9 freizulegen ist, hängt dabei in erster Linie von dem verwendeten Kommunikationsprotokoll ab. Bei einem T=1-Protokoll sind insofern fünf Kontakte 5 durch die Substratschicht 10 hindurch freizulegen, während es bei anderen Kommunikationsprotokollen, wie z. B. dem I²C-Protokoll weniger als fünf freigelegte Kontakte 5 sein können.

Es ist möglich, bei einem Datenträger 1 zusätzlich oder alternativ zu der kontaktbehafteten Schnittstelle eine kontaktlose Schnittstelle in Form einer Spule oder Antenne vorzusehen, über die die elektronische Personalisierung des Datenträgers 1 im Rahmen des Herstellungsprozesses der Fig.1 ebenso möglich ist, wie die Personalisierung über die kontaktbehaftete Schnittstelle in den Schritten S5, S6. In diesem Fall kann das Ausfräsen von Kontaktlöchern 9 aus der Substratschicht 10 entfallen, wobei anstelle der Isolierung der Kontakte 9 mit dem Schritt S8 eine gezielte Unterbrechung der kontaktlosen Datenkommunikationsverbindung oder Zerstörung der kontaktlosen Schnittstelle erfolgen muss. Dazu wird beispielsweise vor der Durchführung der Personalisierung eine Überbrückung einer Schalteinrichtung zu dem Chip 3 ausgebildet, über die die Personalisierung durchgeführt wird. Nach der Personalisierung kann diese Überbrückung dann durch mechanische Einwirkung, elektrische Energie oder anderweitig unterbrochen bzw. zerstört werden, so dass in ähnlicher Weise wie bei einer kontaktbehafteten Schnittstelle eine Kontaktierung des Chips nicht mehr möglich ist.

Obwohl das Verfahren in erster Linie im Hinblick auf solche portablen Datenträger beschrieben wurde, die eine von außen zugängliche Schnittstelle zu dem Chip 3, z.B. in Form einer Kontaktfläche 7 eines Chipmoduls 6, nicht benötigen, ist das Herstellungsverfahren und die damit verbundene vorteilhafte Personalisierung auf alle übrigen kartenförmigen, zu personalisierenden Datenträger bis auf die Isolierung der Kontakte 5 gegenüber dem Chipmodul 6 in gleicher Weise anwendbar, wobei die Kontaktlöcher dann mit einem elektrisch leitenden Material gefüllt werden müssen, dass eine elektrische Verbindung zwischen den Kontakten 5 und der Kontaktfläche 7 eines durchkontaktierten Chipmoduls 6 schafft. Auch wenn bei einer derartigen Anwendung des erfindungsgemäßen Verfahrens nicht alle Vorteile bezüglich der Sicherheit datenträgerindividueller Daten im Chip 3 erreicht werden sollten, ist die verfahrenstechnische Vereinfachung durch parallele elektronische und optische Personalisierung eines Datenträgers 12 weiterhin gegeben.

## Patentansprüche

1. Verfahren zum Herstellen eines portablen Datenträgers (1) durch Aufbringen (S2) eines über Kontakte (5) kontaktierbaren Chips (3) auf ein Datenträgersubstrat (2) und Abdecken (S8) zumindest der Kontakte (5), wobei der auf dem Datenträgersubstrat aufgebrachte Chip (3) vor dem Abdecken (S8) durch Kontaktieren der Kontakte (5) beschrieben wird (S6) und die Kontakte (5) derart abgedeckt werden (S8), dass sie von außerhalb des Datenträgers (1) nicht kontaktierbar sind,
wobei die Kontakte (5) derart mit einer Abdeckplatte (6) abgedeckt werden (S8), dass zwischen der dem Datenträgersubstrat (2) zugewandten Seite der Abdeckplatte (6) und den Kontakten (5) keine leitende Verbindung besteht, **dadurch gekennzeichnet, dass** nach dem Aufbringen (S2) des kontaktierbaren Chips (3) auf das Datenträgersubstrat (2)
- eine die Kontakte (5) bedeckende Substratschicht (10) aufgebracht wird (S3);
- Kontaktlöcher (9) durch die Substratschicht (10) hindurch zu den Kontakten (5) gebildet werden (S5), die nach dem Beschreiben (S6) des Chips (3) ungefüllt bleiben oder mit einem elektrisch isolierenden Material gefüllt werden; und
- die Kontaktlöcher (9) mit der Abdeckplatte (6) abgedeckt werden (S8).

2. Verfahren nach Anspruch 1, wobei die Kontakte (5) mit einem Chipmodul (6) mit einem auf der von dem Datenträgersubstrat (2) abgewandten Seite befindlichen, von außerhalb des Datenträgers (1) kontaktierbaren Kontaktfeld (7) abgedeckt werden (S8), wobei das Chipmodul (6) keine elektrisch leitende Verbindung von dem Kontaktfeld (7) zu der dem Datenträgersubstrat (2) zugewandten Seite des Chipmoduls (6) aufweist.

3. Verfahren nach Anspruch 1, wobei die Kontaktlöcher (9) mit einem Chipmodul (6) mit einem auf der von dem Datenträgersubstrat (2) abgewandten Seite befindlichen, von außerhalb des Datenträgers (1) kontaktierbaren Kontaktfeld (7) mit einer elektrisch leitenden Verbindung von dem Kontaktfeld zu der dem Datenträgersubstrat zugewandten Seite des Chipmoduls (6) abgedeckt werden (S8).

4. Verfahren nach Anspruch 2 oder 3, wobei die Kontakte (5) oder die Kontaktlöcher (9) mit dem Chipmodul (6), dessen Kontaktfeld sechs oder acht Felder gemäß ISO 7816 hat, abgedeckt werden (S8).

5. Verfahren nach einem der Ansprüche 1 bis 4, wobei beim Beschreiben des Chips (3) Personalisierungsdaten in den Chip (3) eingeschrieben werden (S6).

6. Portabler Datenträger (1), umfassend ein Datenträgersubstrat (2), einen darauf aufgebrachten, über Kontakte (5) kontaktierbaren Chip (3) und eine sich zumindest über die Kontakte (5) erstreckende Abdeckung (6), wobei in dem Chip (3) datenträgerindividuelle Daten gespeichert sind und sich die Abdeckung (6) derart über die Kontakte (5) erstreckt, dass sie von außerhalb des Datenträgers (1) nicht kontaktierbar sind, wobei zumindest die Kontakte (5) derart mit einer Abdeckplatte (6) abgedeckt sind, dass zwischen der dem Datenträgersubstrat (2) zugewandten Seite der Abdeckplatte (6) und den Kontakten (5) keine leitende Verbindung besteht, **dadurch gekennzeichnet, dass** eine die Kontakte (5) bedeckende Substratschicht (10) mit durchgängigen Kontaktlöchern (9) zu den Kontakten (5) vorliegt, wobei die Kontaktlöcher (9) ungefüllt oder mit einem elektrisch isolierenden Material gefüllt sind, und die auf der Substratschicht (10) aufgebrachte Abdeckplatte (6)sich über die Kontaktlöcher (9) erstreckt, wobei die Abdeckplatte ein Chipmodul (6) mit einem auf der von dem Datenträgersubstrat (2) abgewandten Seite befindlichen, von außerhalb des Datenträgers (1) kontaktierbaren Kontaktfeld (7) ist und wobei keine elektrisch leitende Verbindung zwischen dem Kontaktfeld (7) und der dem Datenträgersubstrat (2) zugewandten Seite des Chipmoduls (6) besteht.

7. Datenträger (1) nach Anspruch 6, wobei die Abdeckplatte (6) in einer auf der von dem Datenträgersubstrat (2) abgewandten Seite der Substratschicht (10) befindlichen Ausnehmung (8) liegt.

8. Datenträger (1) nach Anspruch 6 oder 7, wobei die Abdeckplatte ein Chipmodul (6) mit einem auf der von dem Datenträgersubstrat (2) abgewandten Seite befindlichen, von außerhalb des Datenträgers (1) kontaktierbaren Kontaktfeld (7) ist und eine elektrisch leitende Verbindung von dem Kontaktfeld (7) zu der dem Datenträgersubstrat (2) zugewandten Seite des Chipmoduls (6) im Bereich der Kontaktlöcher (9) der Substratschicht (10) besteht.

9. Datenträger (1) nach Anspruch 6 oder 8, wobei das Kontaktfeld (7) des Chipmoduls (6) gemäß ISO 7816 sechs oder acht Felder aufweist.

10. Datenträger (1) nach einem der Ansprüche 6 bis 9, wobei sich die Abdeckung (6) vollständig über die Kontakte (5) und den Chip (3) erstreckt.

## Claims

1. A method for manufacturing a portable data carrier (1) by applying (S2) a chip (3) contactable via contacts (5) to a data carrier substrate (2) and covering (S8) at least the contacts (5), wherein the chip (3) applied to the data carrier substrate is written (S6) by contacting the contacts (5) prior to the covering (S8), and the contacts (5) are so covered (S8) that they are not contactable from outside of the data carrier (1),
wherein the contacts (5) are so covered (S8) with a cover plate (6) that there is no conductive connection between the side of the cover plate (6) facing the data carrier substrate (2) and the contacts (5), **characterized in that** after applying (S2) the contactable chip (3) to the data carrier substrate (2)
- a substrate layer (10) is applied (S3) that covers the contacts (5);
- contact holes (9) are formed (S5) through the substrate layer (10) to the contacts (5), said contact holes remaining unfilled after the writing (S6) of the chip (3) or being filled with an electrically insulating material; and
- the contact holes (9) are covered (S8) with the contact plate (6).

2. The method according to claim 1, wherein the contacts (5) are covered (S8) with a chip module (6) having a contact pad (7) that is disposed on the side facing away from the data carrier substrate (2) and is contactable from outside of the data carrier (1), wherein the chip module (6) has no electroconductive connection from the contact pad (7) to the side of the chip module (6) facing the data carrier substrate (2).

3. The method according to claim 1, wherein the contact holes (9) are covered (S8) with a chip module (6) having a contact pad (7) that is disposed on the side facing away from the data carrier substrate (2) and is contactable from outside of the data carrier (2), with an electroconductive connection from the contact pad to the side of the chip module (6) facing the data carrier substrate.

4. The method according to claim 2 or 3, wherein the contacts (5) or the contact holes (9) are covered (S8) with the chip module (6), whose contact pad has six or eight fields in accordance with ISO 7816.

5. The method according to any of the claims 1 to 4, wherein upon writing the chip (3) personalization data are written (S6) to the chip (3).

6. A portable data carrier (1) comprising a data carrier substrate (2), a chip (3) that is contactable via contacts (5) applied thereon, and a cover (6) extending at least over the contacts (5), wherein in the chip (3) data-carrier individual data are stored and the cover (6) so extends over the contacts (5) that they are not contactable from outside of the data carrier (1), wherein at least the contacts (5) are so covered with a cover plate (6) that there is no conductive connection between the side of the cover plate (6) facing the data carrier substrate (2) and the contacts (5), **characterized in that** a substrate layer (10) covering the contacts (5) is present having through contact holes (9) to the contacts (5), wherein the contact holes (9) are unfilled or filled with an electrically insulating material, and the cover plate (6) applied to the substrate layer (10) extends over the contact holes (9), wherein the cover plate is a chip module (6) having a contact pad (7) that is disposed on the side facing away from the data carrier substrate (2) and is contactable from outside of the data carrier (1), and wherein there is no electroconductive connection between the contact pad (7) and the side of the chip module (6) facing the data carrier substrate (2).

7. The data carrier (1) according to claim 6, wherein the cover plate (6) lies in a recess (8) disposed on the side of the substrate layer (10) facing away from the data carrier substrate (2).

8. The data carrier (1) according to claim 6 or 7, wherein the cover plate is a chip module (6) having a contact pad (7) that is disposed on the side facing away from the data carrier substrate (2) and is contactable from outside of the data carrier (1), and there is an electroconductive connection from the contact pad (7) to the side of the chip module (6) facing the data carrier substrate (2) in the region of the contact holes (9) of the substrate layer (10).

9. The data carrier (1) according to claim 6 or 8, wherein the contact pad (7) of the chip module (6) has six or eight fields in accordance with ISO 7816.

10. The data carrier (1) according to any of the claims 6 to 9, wherein the cover (6) extends fully over the contacts (5) and the chip (3).

## Revendications

1. Procédé de fabrication d'un support de données portable (1) par application (S2), sur un substrat de support de données (2), d'une puce (3) pouvant être mise en contact par le biais de contacts (5), et recouvrement (S8) au moins des contacts (5), la puce (3) appliquée sur le substrat de support de données étant écrite (S6) avant le recouvrement (S8) par entrée en contact des contacts (5) et les contacts (5) étant recouverts (S8) de telle façon qu'ils ne peuvent pas être mis en contact depuis l'extérieur du support de données (1),
les contacts (5) étant recouverts (S8) de telle façon par une plaque de recouvrement (6) qu'il n'y a pas de liaison conductrice entre le côté de la plaque de recouvrement (6) tourné vers le substrat de support de données (2) et les contacts (5),
**caractérisé en ce que**, après l'application (S2), sur le substrat de support de données (2), de la puce (3) pouvant être mise en contact,
- une couche de substrat (10) recouvrant les contacts (5) est appliquée (S3);
- des trous de contact (9) accédant aux contacts (5) sont formés (S5) à travers la couche de substrat (10) puis restent non remplis après l'écriture (S6) de la puce (3) ou sont remplis avec un matériau électriquement isolant; et
- les trous de contact (9) sont recouverts (S8) par la plaque de recouvrement (6).

2. Procédé selon la revendication 1, les contacts (5) étant recouverts (S8) par un module puce (6) ayant un champ de contact (7) se trouvant du côté tourné à l'opposé du substrat de support de données (2) et pouvant être mis en contact depuis l'extérieur du support de données (1), le module puce (6) ne comportant pas de liaison éléctroconductrice du champ de contact (7) au côté du module puce (6) tourné vers le substrat de support de données (2).

3. Procédé selon la revendication 1, les trous de contact (9) étant recouverts (S8) par un module puce (6) ayant un champ de contact (7) se trouvant du côté tourné à l'opposé du substrat de support de données (2) et pouvant être mis en contact depuis l'extérieur du support de données (1), et comportant une liaison éléctroconductrice du champ de contact au côté du module puce (6) tourné vers le substrat de support de données.

4. Procédé selon la revendication 2 ou 3, les contacts (5) ou les trous de contact (9) étant recouverts (S8) par le module puce (6) dont le champ de contact a six ou huit champs selon ISO 7816.

5. Procédé selon une des revendications de 1 à 4, des données de personnalisation étant, lors de l'écriture de la puce (3), écrites (S6) dans la puce (3).

6. Support de données portable (1) comprenant un substrat de support de données (2), une puce (3) appliquée sur ce dernier et pouvant être mise en contact par le biais de contacts (5) et un recouvrement (6) s'étendant au moins par-dessus les contacts (5), des données individuelles au support de données étant mémorisées dans la puce (3) et le recouvrement (6) s'étendant de telle manière par-dessus les contacts (5) qu'ils ne peuvent pas être mis en contact depuis l'extérieur du support de données (1), au moins les contacts (5) étant recouverts de telle façon par une plaque de recouvrement (6) qu'il n'y a pas de liaison conductrice entre le côté de la plaque de recouvrement (6) tourné vers le substrat de support de données (2) et les contacts (5), **caractérisé en ce qu'**il y a une couche de substrat (10) recouvrant les contacts (5) et comportant des trous de contact (9) ininterrompus accédant aux contacts (5), les trous de contact (9) étant non remplis ou remplis avec un matériau électriquement isolant, et la plaque de recouvrement (6) appliquée sur la couche de substrat (10) s'étendant par-dessus les trous de contacts (9), la plaque de recouvrement étant un module puce (6) ayant un champ de contact (7) se trouvant du côté tourné à l'opposé du substrat de support de données (2) et pouvant être mis en contact depuis l'extérieur du support de données (1), et aucune liaison éléctroconductrice n'existant entre le champ de contact (7) et le côté du module puce (6) tourné vers le substrat de support de données (2).

7. Support de données (1) selon la revendication 6, la plaque de recouvrement (6) étant logée dans un évidement (8) se trouvant du côté de la couche de substrat (10) tourné à l'opposé du substrat de support de données (2).

8. Support de données (1) selon la revendication 6 ou 7, la plaque de recouvrement étant un module puce (6) ayant un champ de contact (7) se trouvant du côté tourné à l'opposé du substrat de support de données (2) et pouvant être mis en contact depuis l'extérieur du support de données (1), et une liaison éléctroconductrice existant du champ de contact (7) au côté du module puce (6) tourné vers le substrat de support de données (2) dans la zone des trous de contact (9) de la couche de substrat (10).

9. Support de données (1) selon la revendication 6 ou 8, le champ de contact (7) du module puce (6) comportant, suivant ISO 7816, six ou huit champs.

10. Support de données (1) selon une des revendications de 6 à 9, le recouvrement (6) s'étendant entièrement par-dessus les trous de contacts (5) et la puce (3).
